# EUROPEAN PATENT APPLICATION

(11) **EP 4 372 610 A1**
(43) Date of publication of application: **22.05.2024**
(21) Application number: 22306712.5
(22) Date of filing: 21.11.2022
(51) Int. Cl.: G06K 19/077, G06K 19/07

(54) **LED OR OLED CAPACITANCE ANTENNA FOR SMALL FORM FACTORS**

(71) Applicant: THALES DIS FRANCE SAS, 92190 Meudon (FR)
(72) Inventor: BUYUKKALENDER, Arek, 13190 ALLAUCH (FR); MERIDIANO, Jean-Luc, 83170 TOURVES (FR); COLOMBARD, Claude, 84120 PERTUIS (FR); MILANINI, Stéphanie, 83210 SOLLIES-PONT (FR)
(74) Representative: Castelo, Jérôme

(57) **Abstract**

A data carrier (1) for a secure article (100) comprises at least one electronic module (2), at least one antenna (3), and at least one light emitting device (4). The antenna (3) is configured to communicate with a remote device being arranged remotely from the data carrier (1) in a wireless manner. The electronic module (2) is configured to communicate with the remote device via the antenna (3). The antenna (3) is configured to power the electronic module (2) and the light emitting device (4) upon its communication with the remote device.

## Description

### TECHNICAL FIELD

The present invention relates to a data carrier according to claim 1, to a secure article comprising or consisting of such a data carrier according to claim 14, and to a method of producing a data carrier according to claim 15.

### PRIOR ART

Data carriers such as smart cards or electronic tags for passports, as payment cards for payment transactions, etc. are well-known in the art. Such data carriers can provide an identification or an authentication such as a light emission indicating a successful payment transaction to the owner of the data carrier. For this purpose, a light-emitting device such as an LED module can be provided, which emits light when the payment transaction is successful. In order for the light emitting device to emit light, it needs to be powered.

To this end it is known to provide an LED antenna that powers the LED module. Disadvantages associated with such an LED antenna are the high number of turns required on the LED antenna in order to power the LED module, a big energy consumption, and perturbations of other antennas in the data carrier such as the module antenna of an electronic module. Furthermore, such an LED antenna is associated with manufacturing costs and the LED lightning is weak.

Other known solutions, where an LED module is turned on without any other energy than the energy from a reader field requires semiconductors that are provided in addition to an antenna, which thus requires additional components and is associated with manufacturing costs as well.

### SUMMARY OF THE INVENTION

It is an object of the present invention to provide a data carrier comprising a light emitting device that is of a simple design and enables enhanced lighting capabilities.

This object is achieved with a data carrier according to claim 1. That is, a data carrier for a secure article is provided, wherein the data carrier comprises at least one electronic module, at least one antenna, and at least one light emitting device. The antenna is configured to communicate with a remote device being arranged remotely from the data carrier in a wireless manner. The electronic module is configured to communicate with the remote device via the antenna. The antenna is configured to power the electronic module and the light emitting device upon its communication with the remote device.

The communication between the electronic module, in particular the antenna, and the remote device preferably is a wireless communication via electromagnetic radiation, in particular via radio waves.

Thus, the remote device preferably is configured to emit electromagnetic radiation, in particular radio waves. The remote device particularly preferably corresponds to an RF reader as it is known in the field of the art.

As such, it is preferred that the antenna is a radio-frequency (RF) antenna and/or that the electronic module is an RF module. Said RF module can also be referred to as an RF transponder.

The electronic module particularly preferably is a commercially available electronic module. The electronic module preferably comprises an internal microprocessor chip and optionally one or more contact pads. The contact pads may be conventional contact pads such as contact pads being used in contact-type smart cards and being configured to establish an electrical contact with a remoted device being a contact card reader, for instance. Such a smart card is commonly referred to as dual interface smart card. However, it is likewise conceivable that no contact pads are present and that the data carrier is a contactless smart card.

Hence, the present invention is based on the insight that one antenna can be used to power both, the electronic module and the light emitting device. In other words, a capacitive antenna is used to power the electronic module and to turn on the light emitting device. As a result, the capacitance of the microprocessor chip of the electronic module can be increased without having to use an external capacitance. As a result, a better performance of the microprocessor chip of the electronic module is obtain while at the same time it enables data carriers of very small form factors. Furthermore, the design and the manufacturing of the data carrier is simplified. In particular, manufacturing steps during the manufacturing of the data carrier according to the invention can be reduced, see also further below.

The antenna is preferably connected to the light emitting device. Additionally or alternatively, the antenna is preferably connected to the electronic module. That is to say, the antenna is preferably physically connected to the light emitting device and/or the electronic module. For instance, the antenna and the light emitting device and/or the electronic module can be connected to one another via thermocompression, tin soldering, conductive glue, or conductive adhesives, or other type of connections as it is well-known in the field of the art.

The antenna preferably connects the electronic module and the light emitting device in parallel. Alternatively, the antenna can connect the electronic module and the light emitting device in parallel.

The antenna preferably comprises end portions, and wherein the electronic module and/or the light emitting device are connected to the end portions of the antenna.

The antenna preferably is electrically conductive. It is furthermore preferred that the antenna has the form of a track or wire. For instance, the antenna can be a copper wire.

The antenna preferably at least partially and particularly preferably essentially entirely surrounds the light emitting device and/or the electronic module.

Moreover, the antenna and the light emitting module and/or the electronic module are preferably arranged in a single plane. In other words, when seen in cross-section of the data carrier, the electronic module, the antenna and the light emitting device located at a same vertical position within the data carrier. Again in other words, the electronic module, the antenna and the light emitting device are preferably not arranged above one another nor vertically offset to one another.

The antenna preferably comprises at least a first spiral with a plurality of first turns and a second spiral with a plurality of second turns. It is furthermore preferred that the second spiral extends at least partially and preferably essentially entirely between the first turns of the first spiral. In other words, the first spiral and the second spiral are preferably interlaced.

The antenna preferably comprises at least 4 turns. Additionally or alternatively, the antenna preferably comprises 40 turns or less. Particularly preferably, the antenna comprises 20 turns.

To this end it is preferred that the first spiral of the antenna comprises at least 2 turns and/or 20 turns or less and particularly preferably 10 turns. Moreover, it is preferred that the second spiral of the antenna comprises at least 2 turns and/or 20 turns or less and particularly preferably 10 turns.

Moreover, a spacing between adjacent turns of the antenna is preferably at least 100 micrometer. Additionally or alternatively, a spacing between adjacent turns of the antenna is preferably 400 micrometer or less. A particularly preferred spacing between adjacent turns of the antenna is 200 micrometer.

To this end it is preferred that the spacing between adjacent turns of the first spiral of the antenna is at least 200 micrometer and/or 800 micrometer or less and particularly preferably is 400 micrometer. Moreover, it is preferred that the spacing between adjacent turns of the second spiral of the antenna is at least 200 micrometer and/or 800 micrometer or less and particularly preferably is 400 micrometer.

The first spiral and the second spiral in each case preferably comprises a first end portion and a second end portion. The first end portion of the first spiral is preferably connected to the light emitting device and/or to the electronic module. Additionally or alternatively, the second end portion of the first spiral is preferably connected to the first end portion of the second spiral. Additionally or alternatively, the second end portion of the second spiral is preferably connected to the light emitting device and/or to the electronic module.

That is, and as mentioned above, the antenna preferably comprises end portions. To this end, it is particularly preferred that the electronic module and the light emitting device are connected to the end portions of the antenna. It is furthermore preferred that one of these end portions provides the first end portion of the first spiral and that the other of these end portions provides the second end portion of the second spiral.

In this regard it is noted that the antenna physics such as the dimensions of the antenna, the number of turns of the antenna, a pitch of the antenna, etc., is preferably fixed. Various positions of the light emitting device within the data carrier are however possible by extending a length of the end portions of the antenna.

The first end portion of the first spiral and the second end portion of the second spiral are preferably surrounded by the first turns of the first spiral and by the second turns of the second spiral.

Moreover, the second end portion of the first spiral and the first end portion of the second spiral are preferably connected with one another. In particular, the antenna preferably is a single-piece element such as a single wire, wherein the end portions of the first spiral and of the second spiral merge or extend into one another.

Preferably, the first turns of the first spiral are wound in a first direction and the second turns of the second spiral are wound in a second direction, and wherein the first direction and the second direction equal one another.

The first spiral is preferably associated with a first inductance and the second spiral is preferably associated with a second inductance. The second inductance is preferably higher than the first inductance. Additionally or alternatively, the first inductance is preferably positive and/or the second inductance is preferably negative.

That is, the first spiral and the second spiral of the antenna preferably form mutual inductors. Moreover, the first spiral preferably has a first normal or positive inductance such as 2 µH and the second spiral has a second higher inductance. For instance, the second inductance may be at least ten times greater in absolute value than the first inductance. For example the second inductance could be equal to -38 µH.

The emitting device preferably corresponds to a LED module or to an OLED (organic LED) module. The light emitting device is preferably configured to emit light in the ultraviolet region and/or the visible region and/or the infrared region of the electromagnetic spectrum. The LED module or the OLED module preferably are commercially available modules as they are known in the state or the art. Moreover, two or more light emitting devices can be present, wherein said two or more light emitting devices are preferably connected in series to one another.

The data carrier preferably further comprises at least one carrier body. The electronic module and/or the antenna and/or the light emitting device are preferably at least partially and particularly preferably entirely arranged within the carrier body.

The carrier body preferably corresponds to a card body as it is commonly known in the card industry. That is, the carrier body preferably comprises one or more layers that are arranged above one another and which extend along an extension direction. Two or more layers of the carrier body are preferably connected to one another by means of lamination or the like. Furthermore, the layers preferably comprise or consist of at least one polymer and/or plastic and/or are transparent.

The electronic module and/or the antenna and/or the one or more light emitting devices are preferably at least partially and preferably entirely arranged within the card body.

To this end it is particularly preferred that the antenna is provided on a so-called insert or inlay as it is well-known in the card industry. In fact, the antenna is particularly preferably provided as a wire that is embedded according to the embedding technology well-known in the art. Said inlay or insert is preferably inserted into the carrier body or card body during a hot lamination process thereof. Once laminated, the carrier body or card body is preferably milled on an electronic module area in order to receive the electronic module. The inlay or insert preferably comprise or consists of one or more polymers and/or plastics as the carrier body or card body does. Whereas the electronic module is preferably arranged in a milled cavity in the card body, the light emitting device such as the LED or OLED module can be arranged within a cavity provided in the inlay or insert or in the card body. However, it should be noted that the electronic module can be provided in the inlay or insert as well. The cavity for the light emitting device can likewise be produced by milling as it is known in the art. To this end the light emitting device(s) is preferably arranged so as to illuminate a top side and/or a bottom side of the data carrier, in particular of the card body.

The data carrier preferably further comprises at least one security element, and wherein the light emitting device is preferably configured and/or arranged in order to illuminate the security element.

The security element preferably is an image and/or an alphanumeric character such as an image or name of the holder of the data carrier. Said security element can be provided in the form of a print, an embossing, debossing, an ablation, etc., as it is known in the field of the art.

In another aspect, a secure article comprising or consisting of at least one data carrier as described above is provided. The secure article preferably is a smart card, a passport, an electronic tag, a badge, a travel ticket or the like.

Any statements made herein regarding the data carrier per se preferably likewise apply to the secure article comprising or consisting of the data carrier and vice versa.

The secure article consisting of the data carrier means that the data carrier provides the secure article. For example, the data carrier can be a smart card. However, it is likewise conceivable that the data carrier forms part of a secure article. For instance, the data carrier can be an electronic tag that is embedded in a passport page of a secure article in the form of an e-passport. That is, the data carrier preferably is a form factor, particularly preferably a contactless form factor. To this end it is particularly preferred that the data carrier is an electronic tag compliant with ISO 14443.

In another aspect, a method of producing a data carrier, preferably a data carrier as described above, is provided. The method comprises the steps of i) providing at least one electronic module, ii) providing at least one antenna, and iii) providing at least one light emitting device. The antenna is configured to communicate with a remote device being arranged remotely from the data carrier in a wireless manner. The electronic module is configured to communicate with the remote device via the antenna. The antenna is configured to power the electronic module and the light emitting device upon its communication with the remote device.

As mentioned initially, the present invention is based on the insight that one antenna can power the electronic module as well as the light emitting device. As a result, the capacitance of the microprocessor chip of the electronic module can be increased without having to use an external capacitance. This not only saves manufacturing steps during the manufacturing of the data carrier but also provides a very easy manufacturing process for µtags, for example.

Any explanations made herein regarding the data carrier and the secure article comprising or consisting of the data carrier likewise apply to the method of producing the data carrier and vice versa.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows an exploded view of a data carrier comprising a carrier body that has an inlay and an electronic module to be arranged within the carrier body;
- Fig. 2: shows a top view of an inlay comprising an antenna and a light emitting device to be used in a data carrier according to figure 1.

### DESCRIPTION OF PREFERRED EMBODIMENTS

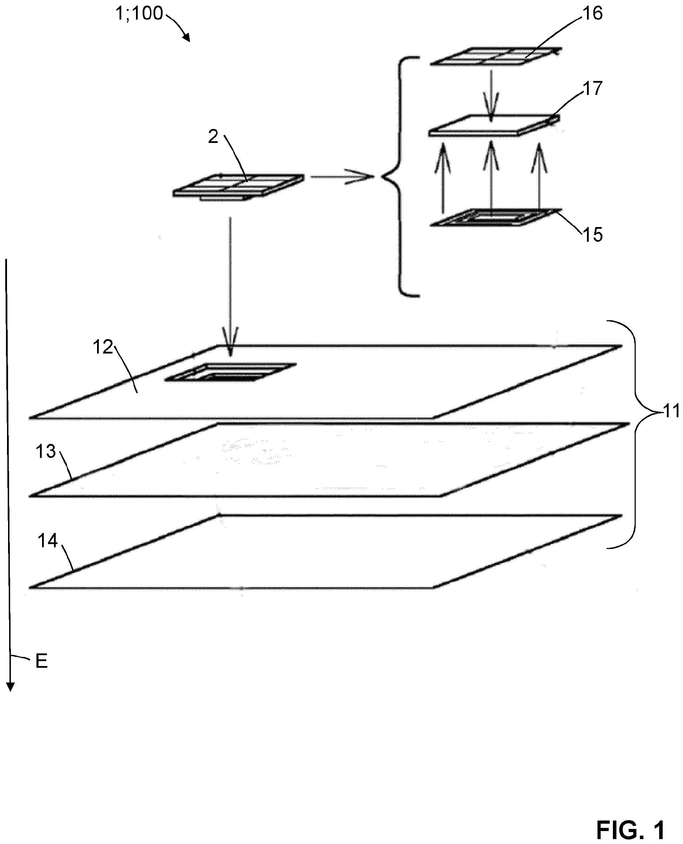

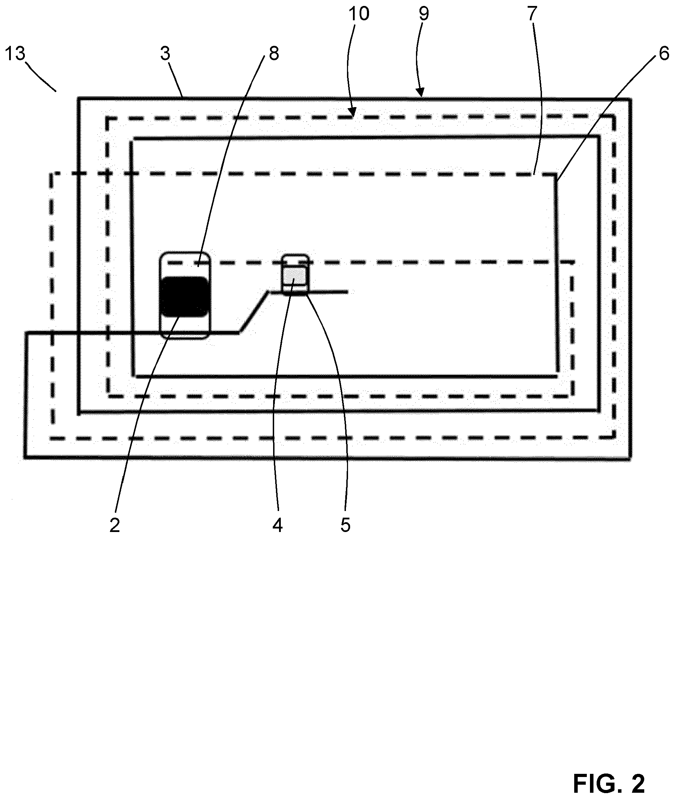

Figure 1 depicts a secure article 100 consisting of a data carrier 1 in the form of a smart card in a schematic manner. In particular, the data carrier 1 comprises a carrier body, wherein said carrier body 11 can also be referred to as card body of the smart card. The carrier body 11 comprises here three layers 12, 13, 14 that are arranged above one another when seen along an extension direction E. These layers 12, 13, 14 preferably consist of a transparent plastic. The layer 13 between the upper most layer 12 and the lowermost layer 14 is a so-called inlay. The inlay 13 and the uppermost and lowermost layers 12, 14 of the carrier body 11 are connected to one another via a hot lamination, for instance. Details of the inlay 13 will be discussed with reference to figure 2 that depicts an actual inlay 13 according to the invention and in particular an antenna 3 and a light emitting device 4. The inlay of figure 1 is schematic and shall serve the purpose of illustrating a conceivable assembly of a carrier body 11 of a data carrier 1.

As follows from figure 1, the data carrier 1 further comprises an electronic module 2 that comprises an internal microprocessor chip 15 and contact pads 16 for contact protocol communication. These components are contained on a module substrate 17. Once laminated, a cavity 18 is milled into the carrier body 11 and the electronic module 2 is placed therein. The electronic module 2, the antenna 3 and the light emitting device 4 are thus entirely arranged within the carrier body or card body 11. It is noted that the electronic module can likewise be arranged in the inlay 13.

As just mentioned, figure 2 depicts an embodiment of an inlay 13 according to the invention, wherein said inlay 13 comprises the antenna 3 as well as a light emitting device 4. In the depicted example, the electronic module 2 is provided in the inlay 13 as well. Hence, the electronic module, but also the antenna 3 or the light emitting device 4 could also be arranged elsewhere in the carrier body 11, for instance in the uppermost layer 12 or lowermost layer 13 of the carrier body 11. The electronic module 2 is configured to communicate with a remote device (not shown) being arranged remotely from the data carrier 1 via the antenna 3. The antenna 3 is furthermore configured to communicate with the remote device in a wireless manner as well. Moreover, the antenna 3 powers the electronic module 2 as well as the light emitting device 4 upon its communication with the remote device.

In the depicted example the light emitting device 4 corresponds to a LED module or to an OLED module that can emit light in different regions of the electromagnetic spectrum depending on the type of LED or OLED module.

The antenna 3 is made of a single wire and comprises here a first spiral 9 with a plurality of first turns and a second spiral 10 with a plurality of second turns, and wherein the second spiral 10 essentially entirely extends between the first turns of the first spiral 9. The first spiral 9 is indicated by means of a solid line and the second spiral 10 is indicated by means of a dashed line for better distinguishability.

The first spiral 9 and the second spiral 10 in each case comprises a first end portion 5, 7 and a second end portion 6, 8. The first end portion 5 or the beginning of the first spiral 9 is connected to the light emitting device 4. The second end portion 6 or the end of the first spiral 9 is connected to the first end portion 7 or the beginning of the second spiral 10. The second end portion 8 or end of the second spiral 10 is connected to the electronic module 2. In addition, the second end portion 6 of the first spiral 9 and the first end portion 7 of the second spiral 10 are connected with one another. In particular, these end portions 6, 7 merge into one another or extend into one another. In other words, these end portions 6, 7 are integral portions of a single-piece antenna 3. Moreover, and as readily follows from figure 2, the antenna 3 connects the electronic module 2 and the light emitting device 4 in parallel.

In addition, the first end portion 5 of the first spiral 9 and the second end portion 8 of the second spiral 10 are surrounded by the first turns of the first spiral 9 and by the second turns of the second spiral 10. Hence, the antenna 3 essentially entirely surrounds the light emitting device 4 and the electronic module 2.

Hence, the present invention provides a single antenna 3 that acts as a capacitance antenna that is connected to the light emitting device 4 as well as the electronic module 2, and wherein said capacitance antenna increases the capacitance of the microprocessor chip 15 of the electronic module and thereby allows for better performances. At the same time, since additional components such as semiconductors can be dispensed with, the present invention allows the generation of data carriers of very small form factors.

**LIST OF REFERENCE SIGNS**

| | | | |
|---|---|---|---|
| 1 | data carrier | 11 | carrier body |
| 100 | secure article | 12 | layer |
| 2 | electronic module | 13 | layer |
| 3 | antenna | 14 | layer |
| 4 | light emitting device | 15 | microprocessor chip |
| 5 | first end portion | 16 | contact pad |
| 6 | second end portion | 17 | module substrate |
| 7 | first end portion | 18 | cavity |
| 8 | second end portion | | |
| 9 | first spiral | E | extension direction |
| 10 | second spiral | | |

## Claims

1. A data carrier (1) for a secure article (100) comprising:
- at least one electronic module (2),
- at least one antenna (3), and
- at least one light emitting device (4),
wherein the antenna (3) is configured to communicate with a remote device being arranged remotely from the data carrier (1) in a wireless manner,
wherein the electronic module (2) is configured to communicate with the remote device via the antenna (3),
**characterized in that** the antenna (3) is configured to power the electronic module (2) and the light emitting device (4) upon its communication with the remote device.

2. The data carrier (1) according to claim 1, wherein the antenna (3) is connected to the light emitting device (4), and/or
wherein the antenna (3) is connected to the electronic module (2).

3. The data carrier (1) according to any one of the preceding claims, wherein the antenna (3) connects the electronic module (2) and the light emitting device (4) in parallel.

4. The data carrier (1) according to any one of the preceding claims, wherein the antenna (3) comprises end portions (5, 8), and wherein the electronic module (2) and/or the light emitting device (4) are connected to the end portions (5, 8) of the antenna (3).

5. The data carrier (1) according to any one of the preceding claims, wherein the antenna (3) at least partially and preferably essentially entirely surrounds the light emitting device (4) and/or the electronic module (2).

6. The data carrier (1) according to any one of the preceding claims, wherein the antenna (3) comprises at least a first spiral (9) with a plurality of first turns and a second spiral (10) with a plurality of second turns, and
wherein the second spiral (10) extends at least partially between the first turns of the first spiral (9).

7. The data carrier (1) according to claim 6, wherein the first spiral (9) and the second spiral (10) in each case comprises a first end portion (5, 7) and a second end portion (6, 8), and wherein at least one of:
- the first end portion (5) of the first spiral (9) is connected to the light emitting device (4) and/or to the electronic module (2),
- the second end portion (6) of the first spiral (9) is connected to the first end portion (7) of the second spiral (10), and
- the second end portion (8) of the second spiral (10) is connected to the light emitting device (4) and/or to the electronic module (2).

8. The data carrier (1) according to claim 7, wherein the first end portion (5) of the first spiral (9) and the second end portion (8) of the second spiral (10) are surrounded by the first turns of the first spiral (9) and by the second turns of the second spiral (10).

9. The data carrier (1) according to claim 6 to 8, wherein the first turns of the first spiral (9) are wound in a first direction and the second turns of the second spiral (10) are wound in a second direction, and
wherein the first direction and the second direction equal one another.

10. The data carrier (1) according to any one of claims 6 to 9, wherein the first spiral (9) is associated with a first inductance and the second spiral (10) is associated with a second inductance, and
wherein the second inductance is higher than the first inductance, and/or
wherein the first inductance is positive and/or the second inductance is negative.

11. The data carrier (1) according to any one of the preceding claims, wherein at least one of:
- the light emitting device (4) corresponds to a LED module or to an OLED module,
- the light emitting device (4) is configured to emit light in the ultraviolet region and/or the visible region and/or the infrared region of the electromagnetic spectrum,
- two or more light emitting devices are present, the two or more light emitting devices preferably being connected in series to one another.

12. The data carrier (1) according to any one of the preceding claims, further comprising at least one carrier body (11), and wherein the electronic module (2) and/or the antenna (3) and/or the light emitting device (4) are at least partially and preferably entirely arranged within the carrier body (11).

13. The data carrier (1) according to any one of the preceding claims, further comprising at least one security element,
wherein the light emitting device (4) is configured and/or arranged in order to illuminate the security element.

14. A secure article (100) comprising or consisting of at least one data carrier (1) as claimed in any one of the preceding claims, wherein the secure article is a smart card, a passport, an electronic tag, a badge, a travel ticket or the like.

15. A method of producing a data carrier (1), preferably a data carrier (1) as claimed in any one of claims 1 to 13, wherein the method comprises the steps of:
- Providing at least one electronic module (2),
- Providing at least one antenna (3), and
- Providing at least one light emitting device (4),
wherein the antenna (3) is configured to communicate with a remote device being arranged remotely from the data carrier (1) in a wireless manner,
wherein the electronic module (2) is configured to communicate with the remote device via the antenna (3),
**characterized in that** the antenna (3) is configured to power the electronic module (2) and the light emitting device (4) upon its communication with the remote device.
